# EUROPÄISCHE PATENTSCHRIFT

(11) **EP 3 158 251 B1**
(45) Veröffentlichungstag und Bekanntmachung des Hinweises auf die Patenterteilung: **29.04.2020**
(21) Anmeldenummer: 15730471.8
(22) Anmeldetag: 16.06.2015
(51) Int. Cl.: F16L 53/00, F16L 53/38, F16L 53/30

(54) **BEHEIZBARE FLUIDLEITUNG**
HEATABLE FLUID LINE
CONDUITE DE FLUIDE CHAUFFANTE

(30) Priorität: 17.06.2014 DE 102014108499
(43) Veröffentlichungstag der Anmeldung: 26.04.2017
(73) Patentinhaber: NORMA Germany GmbH, 63477 Maintal (DE)
(72) Erfinder: MANN, Stephan, 63599 Biebergemünd (DE); GRCIC, Dragan, Kanjiza 24420 (RS)
(74) Vertreter: Patentanwälte Olbricht Buchhold Keulertz
(86) Internationale Anmeldenummer: PCT/EP2015/063465
(87) Internationale Veröffentlichungsnummer: WO 2015/193305

(56) Entgegenhaltungen:
- EP-A1- 1 818 588
- EP-A1- 2 527 702
- EP-A1- 2 527 703
- WO-A1-2013/083274
- DE-A1-102005 047 806
- DE-A1-102008 018 658
- DE-A1-102011 053 053
- US-A- 1 435 311
- US-A1- 2014 029 927

## Beschreibung

Die Erfindung betrifft eine beheizbare Fluidleitung mit einem Rohr, das einen Innenraum aufweist, und einer im Innenraum angeordneten Heizeinrichtung.

Eine derartige Fluidleitung ist aus DE 10 2011 102 244 A1 bekannt.

In der DE 10 2008 018 658 A1 ist eine weitere Fluidleitung gezeigt, bei der die Heizeinrichtung Längsrippen zur Positionierung der Heizleitung im Rohr aufweist. Die Längsrippen können des Weiteren eine Dämpfung für die elektrische Leitung im Rohr bereitstellen, so dass diese vor mechanischen Beanspruchungen geschützt ist.

US 2014/0029927 offenbart eine Rohranordnung mit einem Innenkanal für ein Fluid und einer elektrischen Leitung, die länger ist als das Rohr. Zur Aufnahme der elektrischen Leitung weist das Rohr seitliche Nuten und auf, welche nach außen hin offen sind.

Die Erfindung wird im Folgenden anhand einer Fluidleitung erläutert, die zum Transport einer Harnstofflösung (UREA) von einem Vorratsbehälter zu einer Verbrauchsstelle verwendet wird. UREA wird bei Dieselmotoren verwendet, um die Emission von Stickoxiden zu verringern.

Wenn eine derartige Fluidleitung in einer Umgebung eingesetzt wird, bei der niedrigere Temperaturen auftreten können, besteht die Gefahr, dass die Harnstofflösung einfriert, so dass sie nicht mehr fließfähig ist. Diese Situation tritt bei Temperaturen von unter -11°C auf. Um dennoch innerhalb einer gewissen Zeit nach dem Anlassen eines Motors den Ausstoß von Schadstoffen zu verringern, ist es bekannt, die Fluidleitung zu beheizen, so dass die Harnstofflösung wieder fließfähig gemacht wird und der Verbrauchsstelle zugeführt werden kann.

Ein weiteres Problem besteht darin, dass die Harnstofflösung auch in einem Einspritzbereich einfrieren kann. Dort gibt es eine Düsenanordnung, durch die UREA ausgestoßen wird. Wenn diese Düsenanordnung noch mit der Harnstofflösung gefüllt ist und die Harnstofflösung einfriert, dann kann es zu Beschädigungen kommen.

Um diesem Problem abzuhelfen, hat man versucht, nach dem Abschalten des Motors die Harnstofflösung aus der Fluidleitung zurück zu saugen, um die Düsen von der Harnstofflösung frei zu machen. Allerdings ergibt sich hierbei ein Problem dadurch, dass ein relativ großes Volumen zwischen der Heizeinrichtung und dem Rohr vorhanden ist. Dieses Volumen ist dadurch bedingt, dass eine im Innenraum des Rohres angeordnete Heizeinrichtung auch durch einen Verbinder geführt werden muss, der in das Rohr eingesteckt ist. Dementsprechend kann die Heizeinrichtung einen gewissen Querschnitt nicht überschreiten. Das Ansaugen einer durch das größere Volumen bedingten größeren Menge von Harnstofflösung ist jedoch in vielen Fällen relativ schwierig.

Allerdings hat sich gezeigt, dass sich auch bei einer derartigen Ausgestaltung ein Absaugen der Harnstofflösung beim Abstellen des Motors nicht mit der nötigen Zuverlässigkeit erreichen lässt. Wenn UREA nicht ausreichend zurück gesaugt wird, verbleibt UREA in der Einspritzanordnung. Dies kann bei niedrigen Temperaturen zu Schäden führen.

Der Erfindung liegt die Aufgabe zugrunde, die Einspritzanordnung zu schützen. Gelöst ist diese Aufgabe durch die Merkmale des Anspruchs 1.

Wenn man ein Volumenreduktionselement in dem Innenraum anordnet, also in dem Zwischenraum zwischen der Heizeinrichtung und der Innenseite des Rohres. Lässt sich eine Volumenverringerung in dem Ringspalt zwischen dem Rohr und der Heizeinrichtung erzielen, so dass weniger Harnstofflösung zurückgesaugt werden muss. Dies lässt sich in der Regel problemlos bewerkstelligen. Durch das Volumenreduktionselement wird die Düsenanordnung nach dem Abstellen des Motors geschützt, wobei das Volumenreduktionselement eine entlang der Heizeinrichtung verlaufende Ausnehmung aufweist und als Rohrstück mit einem Innenquerschnitt ausgebildet ist und einen Mantel aufweist, der in Längsrichtung eine Trennfuge aufweist.

Durch den Einbau des Volumenreduktionselements ist zwar das Volumen in den Ringspalt zwischen Rohr und Heizstab verringert worden. Es ergibt sich allerdings eine relativ große benetzte Oberfläche mit einem entsprechend großen Strömungswiderstand, so dass die Pumpe beim Zurücksaugen der Harnstofflösung gelegentlich an ihre Grenzen kommt oder überfordert wird. Die Ausnehmung hat eine geringere benetzte Oberfläche und damit einen geringeren Strömungswiderstand, so dass die Pumpe UREA aus der Einspritzanordnung absaugen kann.

Wenn man eine Ausnehmung im Volumenreduktionselement verwendet, dann kann man den Ringspalt zwischen dem Volumenreduktionselement und dem Rohr sogar noch kleiner machen als bisher, so dass das Volumen zwischen dem Rohr und der Heizeinrichtung nicht oder nicht wesentlich vergrößert werden muss. Man kann also mit anderen Worten das Saugverhalten, insbesondere das Saugvolumen, der Pumpe unverändert belassen und trotzdem ein ausreichendes Absaugen und damit einen Schutz der Einspritzanordnung erreichen.

Vorzugsweise geht die Ausnehmung bis zur Heizeinrichtung durch. Die Heizeinrichtung kann dann unmittelbar auf das in der Fluidleitung befindliche Fluid wirken, ohne dass die Heizleistung zunächst das Volumenreduktionselement durchdringen muss. Damit ergibt sich nicht nur eine hervorragende Ausnutzung der Wärmeenergie, sondern man kann auch ein schnelles Auftauen von eingefrorenem Fluid in der Leitung erreichen.

Vorzugsweise weist die Ausnehmung in Umfangsrichtung der Heizeinrichtung eine Erstreckung auf, die mindestens einer radialen Dicke des Volumenreduktionselements entspricht. Die Ausnehmung ist also im Prinzip zumindest mit einem quadratischen oder auch mit einem rechteckigen Querschnitt (wenn man die Krümmungen außer Acht lässt) versehen, so dass ein ausreichender Strömungsquerschnitt zur Verfügung steht, durch den das Fluid fließen und durch den das Fluid auch abgesaugt werden kann.

Erfindungsgemäß ist die Heizeinrichtung als Heizstab ausgebildet und das Volumenreduktionselement auf den Heizstab aufgeclipst. Dies erlaubt eine relativ einfache Fertigung. Ein Heizstab weist eine gewisse Steifigkeit auf, so dass er in das Rohr eingeschoben werden kann und man sicherstellen kann, dass der Heizstab das Rohr auf der gewünschten Länge durchsetzt. Wenn das Volumenreduktionselement auf den Heizstab aufgeclipst ist, hält es zwar nur durch Reibung auf dem Heizstab. Diese Reibung kann aber so dimensioniert werden, dass das Volumenreduktionselement auf dem Heizstab in Längsrichtung nicht verschoben wird, wenn der Heizstab in das Rohr hineingeschoben wird. Die Biegesteifigkeit des Heizstabes mit aufgeclipsten Volumenreduktionselement kann kleiner gehalten werden als die Biegesteifigkeit eines Heizstabes mit aufextrudierten Volumenreduktionselement. Damit wird auch die Flexibilität der Fluidleitung insgesamt günstig gestaltet.

Vorzugsweise ist das Volumenreduktionselement zumindest abschnittsweise durch einen Hohlkörper gebildet, der in Längsrichtung aufgetrennt ist. Als Hohlkörper kann man beispielsweise ein Kunststoffrohr verwenden, das in Längsrichtung aufgeschnitten wird. Die Schnittlinie muss dabei nicht unbedingt eine Gerade bilden, obwohl dies bevorzugt ist. Die Schnitt- oder Trennlinie kann auch schraubenlinienförmig oder wellenförmig verlaufen, ohne dass dies prinzipiell am Aufbau der Fluidleitung etwas ändert. Ein durch einen Hohlkörper gebildetes Volumenreduktionselement lässt sich sehr einfach herstellen.

Hierbei ist bevorzugt, dass der Hohlkörper einen Innenquerschnitt aufweist, der kleiner ist als ein Außenquerschnitt des Heizstabes. Dies gilt bei dem Hohlkörper für den Zustand, in dem der Hohlkörper noch nicht auf den Heizstab aufgebracht ist. Durch die Dimensionierung des Innenquerschnitts des Hohlkörpers ergeben sich zwei Effekte. Zum einen ist sichergestellt, dass der Hohlkörper mit einer gewissen Spannung auf dem Heizstab sitzt, wenn er auf den Heizstab aufgeclipst worden ist. Zum anderen ergibt sich durch die Dimensionierung die gewünschte Ausnehmung, weil das Volumenreduktionselement etwas gespreizt ist, wenn es auf den Heizstab aufgeclipst ist.

Bevorzugterweise ist das Volumenreduktionselement mit mindestens zwei Abschnitten auf der Heizeinrichtung angeordnet. Dies hat beispielsweise dann Vorteile, wenn die Heizeinrichtung eine größere Länge aufweist. In diesem Fall kann man das Volumenreduktionselement abschnittsweise aufbringen, was die Herstellung erleichtert.

Hierbei ist bevorzugt, dass die mindestens zwei Abschnitte eines Zwischenraums zwischen sich freilassen. Es ist nicht unbedingt erforderlich, dass die Abschnitte sozusagen Stoß an Stoß nebeneinander auf der Heizeinrichtung montiert werden. Man kann durchaus Zwischenräume zwischen den einzelnen Abschnitten belassen. Hierbei ergibt sich zwar ein etwas größeres Volumen. Dies ist aber unschädlich, weil ein derartiges Volumen weder beim Absaugen von UREA aus der Einspritzanordnung oder beim Fördern von UREA zur Einspritzanordnung stört.

Hierbei ist besonders bevorzugt, dass der Zwischenraum in einem gekrümmten Abschnitt der Fluidleitung angeordnet ist. In vielen Fällen verläuft die Fluidleitung nicht gerade, sondern weist einen oder mehrere gekrümmte Abschnitte auf. Die endgültige Form der Fluidleitung richtet sich nach dem gewünschten Verwendungszweck. Man kann bei dieser Ausgestaltung zunächst ein gerades oder gestrecktes Rohr mit der Heizeinrichtung und darauf befindlichem Volumenreduktionselement versehen, indem die Heizeinrichtung geradlinig in das Rohr eingeschoben wird. Wenn man danach einen oder mehrere Abschnitte mit einer Krümmung versieht und an den Positionen, wo die gekrümmten Abschnitte vorgesehen sind ein Volumenreduktionselement nicht vorsieht, dann ist das Ausbilden der Krümmung vereinfacht, weil das Volumenreduktionselement nicht mit gebogen werden muss. Darüber hinaus erlaubt diese Ausgestaltung es auch, dass sich beispielsweise an der Außenseite der Krümmung das Rohr etwas stärker der Heizeinrichtung annähert, ohne dass diese Annäherung durch das Volumenreduktionselement gestört wird. Man nimmt unter Umständen zwar eine Volumenveränderung in Kauf, kann aber den Strömungswiderstand reduzieren, so dass der Strömungswiderstand für die gesamte Fluidleitung optimiert werden kann.

Vorzugsweise ist die Fluidleitung mit der Heizeinrichtung und dem Volumenreduktionselement thermofixiert. Durch die Thermofixierung wird die Fluidleitung in einer vorbestimmten Form gehalten. Bei der Thermofixierung ist eine Verbindung zwischen dem Rohr und dem Volumenreduktionselement nicht erforderlich und in vielen Fällen auch nicht erwünscht. Aufgrund der Reibung zwischen dem Volumenreduktionselement und der Heizeinrichtung bleibt das Volumenreduktionselement allerdings an seiner Position. Geringfügige Verschiebungen sind allerdings unschädlich.

Bevorzugterweise ist an mindestens einem Ende des Rohres ein Verbinder mit einem Stutzen in das Rohr eingesteckt, wobei der Stutzen eine Wand mit einer Dicke aufweist, die maximal der Dicke des Volumenreduktionselements entspricht. Da die Heizeinrichtung durch den Stutzen hindurch geführt werden muss, verbleibt zwischen der Heizeinrichtung und dem Rohr außerhalb des Stutzens ein relativ großes freies Volumen, das, wie oben ausgeführt, durch das Volumenreduktionselement vermindert werden kann. Wenn man die Dicke der Wand des Stutzens auf die Dicke des Volumenreduktionselements, also die "radiale Erstreckung" abstimmt, kann man dafür sorgen, dass sich ein im Wesentlichen gleichmäßiger Strömungswiderstand im Rohr außerhalb des Stutzens und im Stutzen ergibt.

Hierbei ist bevorzugt, dass ein Abstand zwischen dem Volumenreduktionselement und dem Stutzen in Längsrichtung mindestens der Dicke des Volumenreduktionselements entspricht. Damit steht ausreichend Raum zur Verfügung, um es dem in der Leitung befindlichen Fluid zu erlauben, aus dem Ringspalt zwischen dem Volumenreduktionselement und dem Rohr in den Ringspalt zwischen der Heizeinrichtung und dem Stutzen überzutreten.

Die Erfindung wird im Folgenden anhand eines bevorzugten Ausführungsbeispiels in Verbindung mit der Zeichnung beschrieben. Hierin zeigen:
- Fig. 1: die Einzelteile einer beheizbaren Fluidleitung und ihr Zusammenbau in perspektivischer Darstellung,
- Fig. 2: die Darstellung nach Fig. 1 in Schnittansicht und
- Fig. 3: eine stark schematisierte Darstellung einer Fluidleitung im Längsschnitt.

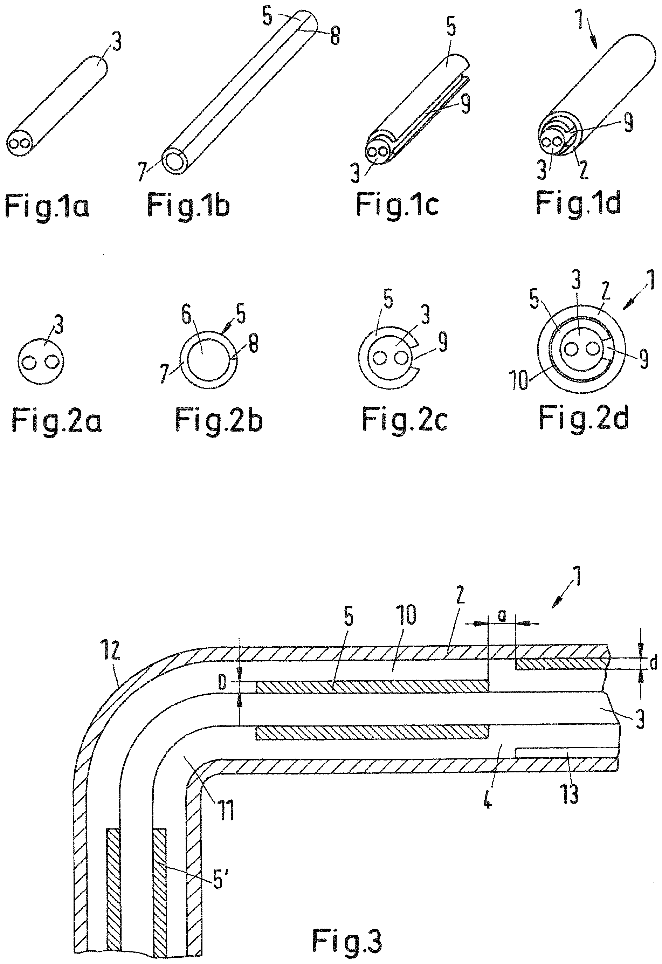

Fig. 1d zeigt eine beheizbare Fluidleitung 1 mit einem Rohr 2, in dem eine Heizeinrichtung in Form eines Heizstabs 3 angeordnet ist. Der Heizstab 3 ist in den Fig. 1a und 2a jeweils als einzelnes Element dargestellt.

In Fig. 3 ist zu erkennen, dass das Rohr 2 einen Innenraum 4 aufweist, in dem der Heizstab 3 angeordnet ist.

Ein Volumenreduktionselement 5, das in den Fig. 1b und 2b als Einzelteil dargestellt ist, ist als ein Rohrstück mit einem Innenquerschnitt 6 ausgebildet. Das Volumenreduktionselement 5 weist einen Mantel 7 auf, der in Längsrichtung eine Trennfuge 8 aufweist. Die Trennfuge 8 kann beispielsweise durch einen Schnitt gebildet sein.

Der Innenquerschnitt 6 des Volumenreduktionselements 5 ist etwas kleiner als ein Außenquerschnitt des Heizstabes 3.

Wie man in den Fig. 1 c und 2c erkennen kann, ist das 30 Volumenreduktionselement 5 auf den Heizstab 3 aufgeclipst. Zu diesem Zweck wird das Volumenreduktionselement 5 an seiner Trennfuge 8 auseinander gebogen und der Heizstab 3 kann durch die entstehende Lücke in den Innenquerschnitt 6 eingesetzt werden. Das Volumenreduktionselement 5 ist beispielsweise aus einem Kunststoff gebildet, der eine gewisse Eigenspannung aufweist. Wenn der Heizstab 3 in den Innenquerschnitt 6 des Volumenreduktionselements 5 eingesetzt ist, dann liegt das Volumenreduktionselement 5 unter einer gewissen Spannung am Umfang des Heizstabs 3 an. Da aber der Innenquerschnitt 6 des Volumenreduktionselements 5 etwas kleiner ist als der Außenquerschnitt des Heizstabs 3, ergibt sich eine Ausnehmung 9, d.h. eine Lücke in der durch das Volumenreduktionselement 5 gebildeten Ummantelung des Heizstabs 3. Diese Ausnehmung 9 geht bis zum Heizstab 3 durch.

Wenn man nun die aus Heizstab 3 und Volumenreduktionselement 5 gebildete Einheit in das Rohr 2 einschiebt (Fig. 1d und 2d), dann ergibt sich durch die Ausnehmung 9 ein Bereich, durch den das Fluid zwischen dem Heizstab 3 und dem Rohr 2 strömen kann. Damit ergibt sich ein freier Querschnitt innerhalb des Rohres 2, der im Verhältnis zu seiner Querschnittsfläche eine relativ geringe benetzte Oberfläche aufweist und damit einen relativ geringen Strömungswiderstand.

Zwischen dem Volumenreduktionselement 5 und dem Rohr 2 verbleibt nach wie vor ein Ringspalt 10, der im Betrieb ebenfalls mit dem Fluid gefüllt ist und durch den auch Fluid strömen kann. Dieser Ringspalt 10 weist aber eine relativ große benetzte Oberfläche auf, so dass sich hier auch ein entsprechend großer Strömungswiderstand ergibt.

Fig. 3 zeigt die Fluidleitung 1 stark schematisiert im Querschnitt. Die dort dargestellten Größenrelationen sind nicht maßstäblich, sondern übertrieben dargestellt, um die nachfolgende Erläuterung zu vereinfachen. Insbesondere ist die Größe des Ringspalts 10 stark übertrieben. Die Ausnehmung 9 ist hier nicht zu erkennen, weil sie in einer anderen Schnittebene liegt.

Es ist zunächst zu erkennen, dass das Volumenreduktionselement 5 zwei Abschnitte 5, 5' aufweist, die durch einen Zwischenraum 11 voneinander getrennt sind. Dieser Zwischenraum 11 ist in einem gekrümmten Abschnitt 12 der Fluidleitung 1 angeordnet. Es ist dargestellt, dass die Abschnitte des Volumenreduktionselements 5, 5' einen relativ großen Abstand von dem gekrümmten Abschnitt 12 aufweisen. In Wirklichkeit wird dieser Abstand wesentlich kleiner sein.

An einem Ende des Rohres ist ein Stutzen 13 eines nicht näher dargestellten Verbinders in das Rohr 2 eingesteckt. Dieser Stutzen 13 weist eine Wand mit einer Dicke d auf. Da der Heizstab 3 auch durch diesen Stutzen geführt sein muss, muss der Heizstab 3 einen Außenquerschnitt aufweisen, der deutlich kleiner ist als der Innenquerschnitt des Stutzens 13, um einen Fluidstrom zu ermöglichen.

Das Volumenreduktionselement 5 weist eine Dicke D auf, die mindestens genauso groß ist, wie die Dicke d des Stutzens 13. Mit anderen Worten, ist die Dicke d des Stutzens 13 maximal so groß wie die Dicke D des 20 Volumenreduktionselements 5, 5'. Damit wird gewährleistet, dass eine Strömung des Fluids durch den Stutzen 13 nicht stärker behindert wird als eine Strömung durch das Rohr 2 mit dem innenliegenden Volumenreduktionselements 5, 5'.

Ein Abstand a zwischen dem Volumenreduktionselement 5 und dem Stutzen 13 entspricht mindestens der Dicke D des Volumenreduktionselements 5. Er kann aber auch größer sein.

Zur Fertigung der Fluidleitung 1 wird das Rohr 2 zunächst in gestreckter oder gerader Ausrichtung belassen. Auch der Heizstab 3 weist eine gerade Form auf, ist also zunächst frei von Krümmungen oder dergleichen. Als nächstes wird das in den Fig. 1b und 2b dargestellte Volumenreduktionselement 5 auf den Heizstab 3 aufgeclipst. Dies muss nicht über die gesamte Länge des Volumenreduktionselements 5 gleichzeitig erfolgen. Vielmehr kann man den Heizstab 3 entlang der Trennnaht 8 in den Innenraum 6 des Volumenreduktionselements 5 hineindrückt. Dies ist eine relativ einfache Art der Fertigung. Es entsteht ein Heizstab 3 mit aufgeclipsten Volumenreduktionselement 5, wie dies in den Fig. 1c und 2c dargestellt ist. Dabei ergibt sich automatisch die Ausnehmung 9, deren Erstreckung in Umfangsrichtung mindestens der radialen Dicke D des Volumenreduktionselements 5 entspricht.

Der so mit dem Volumenreduktionselement 5 oder mit mehreren Volumenreduktionselementen 5, 5' versehene Heizstab 3 kann dann in das Rohr 2 eingesetzt werden, was problemlos möglich ist, weil sowohl das Rohr als auch der Heizstab 3 mit dem oder den Volumenreduktionselementen 5, 5' eine gerade Form haben. Danach wird das Rohr 2 mit dem Heizstab 3 und den Volumenreduktionselementen 5,5' in die gewünschte Form gebogen, so dass sich ein oder mehrere gekrümmte Abschnitte 12 ergeben. Das in Form gebrachte Rohr wird dann thermofixiert. Durch die Ausnehmung 9 ergibt sich ein relativ geringer Strömungswiderstand für ein Fluid in dem Rohr 2. Da die Ausnehmung 9 bis auf den Heizstab 3 durchgeht, kann der Heizstab 3 das im Rohr befindliche Fluid direkt beheizen, ohne dass ein Wärmefluss durch das Volumenreduktionselement 5 notwendig wäre. Dieser ist natürlich gleichwohl vorhanden und beheizt auch ein Fluid im Ringspalt 10.

## Patentansprüche

1. Beheizbare Fluidleitung (1) mit einem Rohr (2), das einen Innenraum (4) aufweist, und einer im Innenraum (4) angeordneten Heizeinrichtung (3), wobei zwischen dem Rohr (2) und der Heizeinrichtung (3) ein Volumenreduktionselement (5) zur Verringerung des Volumens in einem Ringspalt zwischen dem Rohr (2) und der Heizeinrichtung (3) angeordnet ist, **dadurch gekennzeichnet, dass** das Volumenreduktionselement (5) eine entlang der Heizeinrichtung (3) verlaufende Ausnehmung (9) aufweist und als Rohrstück mit einem Innenquerschnitt (6) ausgebildet ist und einen Mantel (7) aufweist, der in Längsrichtung eine Trennfuge (8) aufweist, und wobei die Heizeinrichtung als Heizstab (3) ausgebildet ist und das Volumenreduktionselement (5) auf den Heizstab (3) aufgeclipst ist.

2. Fluidleitung nach Anspruch 1, **dadurch gekennzeichnet, dass** die Ausnehmung (9) bis zur Heizeinrichtung (3) durchgeht.

3. Fluidleitung nach Anspruch 2, **dadurch gekennzeichnet, dass** die Ausnehmung (9) in Umfangsrichtung der Heizeinrichtung (3) eine Erstreckung aufweist, die mindestens einer radialen Dicke (D) des Volumenreduktionselements (5) entspricht.

4. Fluidleitung nach einem der vorhergehenden Ansprüche, **dadurch gekennzeichnet, dass** das Volumenreduktionselement (5) zumindest abschnittsweise durch einen Hohlkörper gebildet ist, der in Längsrichtung aufgetrennt ist.

5. Fluidleitung nach Anspruch 4, **dadurch gekennzeichnet, dass** der Hohlkörper einen Innenquerschnitt (6) aufweist, der kleiner ist als ein Außenquerschnitt des Heizstabes (3).

6. Fluidleitung nach einem der Ansprüche 1 bis 5, **dadurch gekennzeichnet, dass** das Volumenreduktionselement (5) mit mindestens zwei Abschnitten auf der Heizeinrichtung (3) angeordnet ist.

7. Fluidleitung nach Anspruch 6, **dadurch gekennzeichnet, dass** die mindestens zwei Abschnitte einen Zwischenraum (11) zwischen sich frei lassen.

8. Fluidleitung nach Anspruch 7, **dadurch gekennzeichnet, dass** der Zwischenraum (11) in einem gekrümmten Abschnitt (12) der Fluidleitung (1) angeordnet ist.

9. Fluidleitung nach einem der Ansprüche 1 bis 8, **dadurch gekennzeichnet, dass** die Fluidleitung (1) mit der Heizeinrichtung (3) und dem Volumenreduktionselement (5) thermofixiert ist.

10. Fluidleitung nach einem der Ansprüche 1 bis 9, **dadurch gekennzeichnet, dass** an mindestens einem Ende des Rohres (2) ein Verbinder mit einem Stutzen (13) in das Rohr (2) eingesteckt ist, wobei der Stutzen (13) eine Wand mit einer Dicke (d) aufweist, die maximal der Dicke (D) des Volumenreduktionselements (5) entspricht.

11. Fluidleitung nach Anspruch 10, **dadurch gekennzeichnet, dass** ein Abstand (a) zwischen dem Volumenreduktionselement (5) und dem Stutzen (13) in Längsrichtung mindestens der Dicke (D) des Volumenreduktionselements (5) entspricht.

## Claims

1. Heatable fluid line (1), comprising a pipe (2) that has an inner space (4), and a heating device (3) arranged in the inner space (4), a volume reduction element (5) being arranged between the pipe (2) and the heating device (3) for reducing the volume in an annular gap between the pipe (2) and the heating device (3), **characterised in that** the volume reduction element (5) has a recess (9) extending along the heating device (3) and is constructed as a pipe section with an internal cross-section (6) and has a jacket (7) that has a parting line (8) in the longitudinal direction, and wherein the heating device is constructed as a heating rod (3) and the volume reduction element (5) is clipped onto the heating rod (3).

2. Fluid line according to claim 1, **characterised in that** the recess (9) extends as far as the heating device (3).

3. Fluid line according to claim 2, **characterised in that** the recess (9) has in the circumferential direction of the heating device (3) an extent that corresponds to at least a radial thickness (D) of the volume reduction element (5).

4. Fluid line according to any one of the preceding claims, **characterised in that** the volume reduction element (5) is at least partially formed as a hollow body, which is separated in the longitudinal direction.

5. Fluid line according to claim 4, **characterised in that** the hollow body has an inner cross-section (6) that is smaller than an outer cross-section of the heating rod (3).

6. Fluid line according to any one of claims 1 to 5, **characterised in that** the volume reduction element (5) is arranged with at least two portions on the heating device (3).

7. Fluid line according to claim 6, **characterised in that** the at least two portions leave an intermediate space (11) free between them.

8. Fluid line according to claim 7, **characterised in that** the intermediate space (11) is arranged in a curved portion (12) of the fluid line (1).

9. Fluid line according to any one of claims 1 to 8, **characterised in that** the fluid line (1) is thermo-fixed to the heating device (3) and the volume reduction element (5).

10. Fluid line according to any one of claims 1 to 9, **characterised in that**, at at least at one end of the pipe (2), a connector with a connection piece (13) is inserted into the pipe (2), the connection piece (13) having a wall with a thickness (d) that corresponds at most to the thickness (D) of the volume reduction element (5).

11. Fluid line according to claim 10, **characterised in that** a spacing (a) between the volume reduction element (5) and the connection piece (13) in the longitudinal direction corresponds to at least the thickness (D) of the volume reduction element (5).

## Revendications

1. Conduite de fluide chauffante (1) avec un tube (2), qui présente un espace intérieur (4), et un dispositif de chauffage (3) agencé dans l'espace intérieur (4), dans laquelle un élément de réduction de volume (5) pour la réduction du volume dans une fente annulaire entre le tube (2) et le dispositif de chauffage (3) est agencé entre le tube (2) et le dispositif de chauffage (3), **caractérisée en ce que** l'élément de réduction de volume (5) présente un évidement (9) s'étendant le long du dispositif de chauffage (3) et est réalisé en tant qu'élément de tube avec une section transversale intérieure (6) et présente une enveloppe (7), qui présente un joint de séparation (8) dans la direction longitudinale, et dans laquelle le dispositif de chauffage est réalisé en tant qu'élément chauffant (3) et l'élément de réduction de volume (5) est clipsé sur l'élément chauffant (3).

2. Conduite de fluide selon la revendication 1, **caractérisée en ce que** l'évidement (9) passe à travers jusqu'au dispositif de chauffage (3).

3. Conduite de fluide selon la revendication 2, **caractérisée en ce que** l'évidement (9) présente dans la direction circonférentielle du dispositif de chauffage (3) une extension, qui correspond à au moins une épaisseur radiale (D) de l'élément de réduction de volume (5).

4. Conduite de fluide selon l'une quelconque des revendications précédentes, **caractérisée en ce que** l'élément de réduction de volume (5) est formé au moins par section par un corps creux, qui est séparé dans la direction longitudinale.

5. Conduite de fluide selon la revendication 4, **caractérisée en ce que** le corps creux présente une section transversale intérieure (6), qui est inférieure à une section transversale extérieure de l'élément chauffant (3).

6. Conduite de fluide selon l'une quelconque des revendications 1 à 5, **caractérisée en ce que** l'élément de réduction de volume (5) avec au moins deux sections est agencé sur le dispositif de chauffage (3).

7. Conduite de fluide selon la revendication 6, **caractérisée en ce que** les au moins deux sections laissent un espace intermédiaire (11) libre entre elles.

8. Conduite de fluide selon la revendication 7, **caractérisée en ce que** l'espace intermédiaire (11) est agencé dans une section incurvée (12) de la conduite de fluide (1).

9. Conduite de fluide selon l'une quelconque des revendications 1 à 8, **caractérisée en ce que** la conduite de fluide (1) est fixée thermiquement avec l'élément de chauffage (3) et l'élément de réduction de volume (5).

10. Conduite de fluide selon l'une quelconque des revendications 1 à 9, **caractérisée en ce qu'**un connecteur avec un embout (13) est inséré dans le tube (2) à au moins une extrémité du tube (2), dans laquelle l'embout (13) présente une paroi avec une épaisseur (d), qui correspond au maximum à l'épaisseur (D) de l'élément de réduction de volume (5).

11. Conduite de fluide selon la revendication 10, **caractérisée en ce qu'**une distance (a) entre l'élément de réduction de volume (5) et l'embout (13) dans la direction longitudinale correspond au moins à l'épaisseur (D) de l'élément de réduction de volume (5).
